# FASCICULE DE BREVET EUROPEEN

(11) **EP 2 786 470 B1**
(45) Date de publication et mention de la délivrance du brevet: **25.10.2023**
(21) Numéro de dépôt: 12794448.6
(22) Date de dépôt: 06.11.2012
(51) Int. Cl.: H02K 1/27

(54) **ROTOR DE MACHINE ÉLECTRIQUE TOURNANTE ET MACHINE ÉLECTRIQUE TOURNANTE COMPRENANT UN TEL ROTOR**
ROTOR FÜR EINE ELEKTRISCHE DREHMASCHINE UND ELEKTRISCHE DREHMASCHINE MIT EINEM DERARTIGEN ROTOR
ROTOR FOR A ROTARY ELECTRIC MACHINE AND ROTARY ELECTRIC MACHINE COMPRISING SUCH A ROTOR

(30) Priorité: 01.12.2011 FR 1161019
(43) Date de publication de la demande: 08.10.2014
(73) Titulaire: Valeo Equipements Electriques Moteur, 94046 Créteil Cedex (FR)
(72) Inventeur: BOUARROUDJ, Lilya, F-94220 Charenton Le Pont (FR); MATT, Jean-Claude, F-21000 Dijon (FR); LABROSSE, Jean-Claude, F-94220 Charenton Le Pont (FR)
(74) Mandataire: Valeo Powertrain Systems
(86) Numéro de dépôt international: PCT/FR2012/052564
(87) Numéro de publication internationale: WO 2013/079842

(56) Documents cités:
- EP-A1- 0 391 791
- EP-A1- 1 100 176
- EP-A2- 2 246 962
- DE-A1-102009 026 524

## Description

### DOMAINE TECHNIQUE DE L'INVENTION.

La présente invention concerne un rotor à aimants permanents destiné à une machine électrique tournante.

L'invention concerne également une machine électrique tournante comprenant un rotor de ce type, notamment pour des applications dans le domaine des véhicules automobiles.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Un autre exemple d'application de machines électriques de cette gamme de puissance est l'entraînement d'un compresseur centrifuge d'un système de double suralimentation d'un moteur thermique. Le compresseur électrique assiste à bas régime le turbo-compresseur entraîné par les gaz d'échappement et permet de franchir une étape supplémentaire dans la réduction des cylindrées.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Les remarquables performances des machines à aimants permanents actuelles sont pour une grande part dues aux développement des aimants aux terres rares tels que les aimants de type Néodyme-Fer-Bore (NeFeB), Samarium-Fer (SmFe), ou Samarium-Cobalt (SmCo), qui peuvent présenter des rémanences dépassant le tesla.

Cependant, des machines à aimants permanents comprenant un rotor présentant une structure dite "à concentration de flux" avaient de longue date permis d'obtenir des flux magnétiques importants avec des aimants de moindre rémanence, par exemples des aimants obtenus à partir de ferrites frittées ou liées.

De longue date également, les caractéristiques dimensionnelles et magnétiques ce type de structure ont été optimisées, soit en menant de nombreux essais, soit, plus récemment en réalisant des simulations sur ordinateur, de manière à améliorer le rendement électrique des machines.

Un exemple d'optimisation dimensionnelle des aimants et des pôles magnétiques d'un rotor à aimants permanents a été divulgué en 1971 dans le brevet d'invention FR 2.084.279.

L'optimisation dimensionnelle des pôles magnétiques a reçu récemment un regain d'attention comme suite au renchérissement des aimants aux terres rares lié à une conjoncture géo-politique défavorable.

La mise en oeuvre d'aimants aux terres rares dans un rotor de machine électrique destinée aux applications de l'automobile n'étant plus économiquement rentable, et probablement non pérenne, l'autre terme de l'alternative est constitué par les aimants basés sur des ferrites.

Mais la rémanence d'une ferrite étant plus faible que celle d'un aimant aux terres rares, le remplacement des aimants aux terres rares par des ferrites conduit à une machine de moindres performances.

Le document DE 10 2009 026524 A1 présente un rotor de machine électrique tournante comprenant une pluralité de pôles Nord et pôles Sud alternés et formés à partir d'une pluralité d'aimants permanents agencés dans des évidements se prolongeant le long d'un axe du rotor et répartis régulièrement entre une partie circonférentielle et une partie centrale de la masse magnétique du rotor de manière à définir une pluralité de sections polaires circonférentielles, les aimants permanents présentant une première section radiale polygonale et un plan de symétrie axial, et la partie circonférentielle comportant des rainures axiales agencées entre lesdites sections polaires en regard des aimants permanents et formant ouverture des premiers évidements.

### DESCRIPTION GENERALE DE L'INVENTION.

Le but de la présente invention est donc d'optimiser la forme des pôles d'un rotor pour maximiser le flux magnétique dans les pôles et préserver ainsi notamment le couple de la machine.

Elle a précisément pour objet un rotor de machine électrique tournante selon la revendication 1.

Le rotor selon l'invention est remarquable en ce que cette ouverture présente une première largeur prédéterminée de manière à rendre minimum un flux magnétique de fuite circulant dans une direction circonférentielle dans la partie circonférentielle et à rendre maximum un flux magnétique utile circulant radialement dans chacune des sections polaires, cette partie circonférentielle présente un ratio d'ouverture prédéterminé de manière à rendre minimum le flux magnétique de fuite et à rendre maximum le flux magnétique utile.

Avantageusement, le rotor selon l'invention comprend en outre au moins une pluralité de seconds évidements qui se prolongent axialement et qui sont agencés entre les aimants permanents dans une partie intermédiaire du rotor entre la partie centrale et la partie circonférentielle.

Des tirants amagnétiques sont de préférence agencés dans ces seconds évidements.

On tirera bénéfice du fait que les aimants permanents du rotor de machine électrique tournante selon l'invention sont constitués de ferrite.

L'invention concerne également une machine électrique tournante qui comprend un rotor présentant les caractéristiques ci-dessus.

Ces quelques spécifications essentielles auront rendu évidents pour l'homme de métier les avantages apportés par le rotor de machine électrique tournante selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** - ainsi que la description relative à cette figure - ne fait pas partie de l'invention, car par exemple les lobes (15) de la revendication 1 ne sont pas décrits. Seulement la figure 5 représente l'invention telle que définie dans les revendications annexées. La figure 1 montre une vue en coupe radiale simplifiée d'un rotor à aimants permanents dans un mode de réalisation principal de l'invention, agencé dans un stator, montré en coupe radiale partielle, d'une machine électrique.
La **Figure 2** montre un modèle simplifié de l'influence des rainures formant ouverture de la partie circonférentielle du rotor sur la circulation des flux magnétique dans le rotor selon l'invention.
La **Figure 3** montre la variation relative du flux utile au voisinage d'un flux utile maximum en fonction du ratio d'ouverture obtenue par le modèle simplifié montré sur la **Figure 2****.**
La **Figure 4** montre les variations absolue et relative, au voisinage d'un maximum, de la constante de force électromotrice entre phases en fonction du ratio d'ouverture obtenues par une simulation sur ordinateur d'une machine complète comprenant un rotor selon le mode de réalisation montré sur la **Figure 1****.**
La **Figure 5** montre une vue en coupe radiale simplifiée d'un rotor à aimants permanents selon une variante de réalisation de l'invention, agencé dans un stator, montré en coupe radiale partielle, d'une machine électrique tournante selon l'invention.
Les **Figures 6a et 6b** montrent respectivement la forme d'onde de la force électromotrice entre phases à vide et les niveaux d'harmoniques correspondants d'une machine électrique tournante comprenant un rotor selon la variante de réalisation de l'invention montrée sur la **Figure 5****.**
Les **Figures 7a et 7b** montrent respectivement la forme d'onde de la force électromotrice entre phases à vide et les niveaux d'harmoniques correspondants d'une machine électrique tournante du type de celle montrée sur la **Figure 5** mais dont la partie circonférentielle du rotor ne comprendrait pas de rainures formant ouverture.

### DESCRIPTION DES MODES DE REALISATIONS PREFERES DE L'INVENTION.

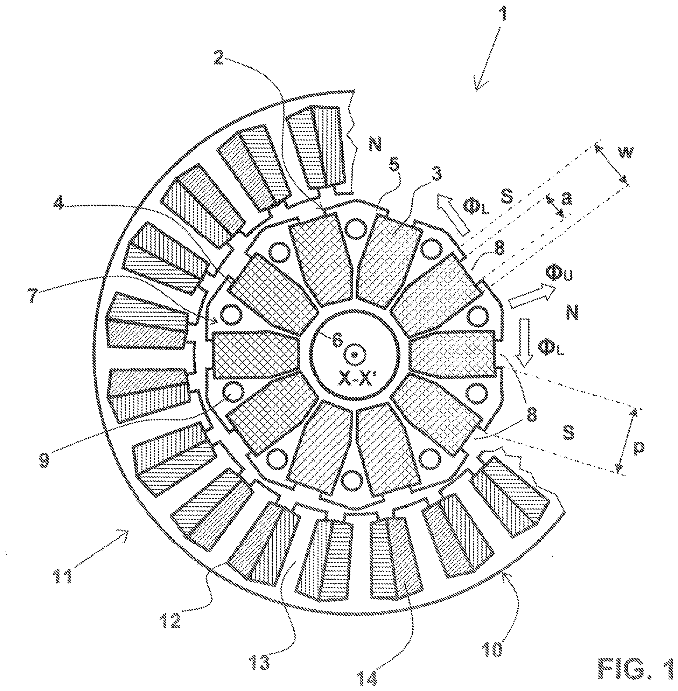

La coupe radiale simplifiée d'un rotor 1 à aimants permanents dans le mode de réalisation principal de l'invention, représentée sur la **Figure 1****,** montre bien l'agencement dans la masse magnétique 2 des aimants permanents 3 dans des premiers évidements 4 répartis régulièrement entre une partie circonférentielle 5 et une partie centrale 6 de manière à former une pluralité de pôles Nord N et pôles Sud S alternés.

Le rotor 1 selon l'invention est du type à concentration de flux. Les aimants permanents 3 sont globalement de section sensiblement rectangulaire, mais chanfreinés en forme de coin vers l'axe X-X' du rotor 1. Ils s'étendent symétriquement au voisinage de plans axiaux équi-angulaires.

Les premiers évidements 4 dans lesquels sont agencés les aimants permanents 3 délimitent dix sections polaires 7 circonférentielles.

La partie circonférentielle 5 comporte des rainures axiales 8 qui sont agencées entre les sections polaires 7 en regard des aimants permanents 3 et qui forment ouverture des premiers évidements 4.

Les sections polaires 7 comportent des deuxièmes évidements 9 agencés entre les aimants permanents 3. Elles s'étendent symétriquement au voisinage de plans axiaux équi-angulaires.

Ces deuxièmes évidements 9 présentent une section circulaire et reçoivent des tirants amagnétiques maintenant les paquets de tôles métalliques formant des masses magnétiques 2, 10 du rotor 1 et d'un stator 11.

Ces deuxièmes évidements 9 contribuent également au contrôle du champ magnétique dans le rotor 1.

Dans une forme de réalisation particulière de cette machine, le rotor 1 comportant dix aimants permanents 3 tourne à l'intérieur d'un stator 11 présentant une pluralité d'encoches 12 définissant une pluralité de dents statoriques 13 autour desquelles sont agencés des bobinages statoriques 14

Une réalisation concrète d'une machine comprenant un tel rotor 1 est par exemple un moteur/génératrice de 8 à 10 KW pour des applications dans des véhicules automobiles du type dits «mild-hybrid».

Dans son mode de fonctionnement en moteur cette machine peut être conçue pour le démarrage du moteur thermique, l'assistance en couple du moteur thermique, la traction électrique à faible vitesse du véhicule ainsi que pour l'entraînement d'un compresseur centrifuge.

Les bobinages statoriques 14 sont parcourus par un courant statorique et créent un champ magnétique tournant entraînant le rotor 1. Le couple moteur fourni dépend notamment de l'intensité du courant statorique et du flux magnétique dans le rotor 1.

Ainsi que cela a été expliqué en préambule, le remplacement des aimants permanents 3 aux terres rares par des aimants permanents 3 en ferrite nécessite une optimisation des pôles magnétiques N, S pour obtenir un flux magnétique similaire dans le rotor 1, et conserver ainsi un même couple moteur pour une même intensité statorique.

Des simulations sur ordinateur de machines électriques comprenant un rotor 1 ayant les caractéristiques ci-dessus ont permis à l'entité inventive d'établir la distribution du flux magnétique dans le rotor 1 et le stator 11.

Il a été établi que le flux magnétique créé par les aimants permanents 3 et circulant dans la masse magnétique 2 du rotor 1 se répartissait entre un flux magnétique utile ΦU circulant radialement dans une section polaire 7 et un flux magnétique de fuite ΦL circulant dans une direction circonférentielle dans la partie circonférentielle 5 du rotor 1.

Le flux magnétique de fuite ΦL dépend de la première largeur a de l'ouverture 8 des évidements 4 contenant les aimants permanents 3. Plus cette première largeur a est importante et plus le flux magnétique de fuite ΦL diminue car une première réluctance à cet endroit de la partie circonférentielle 5 augmente, mais le flux magnétique utile ΦU diminue aussi du fait qu'une surface d'un pôle N, S en regard avec une dent statorique 13 diminue.

Il existe donc une première largeur a optimale de l'ouverture 8, qui est déterminée par la simulation, pour laquelle le flux magnétique de fuite ΦL est minimum et le flux magnétique utile ΦU est maximum.

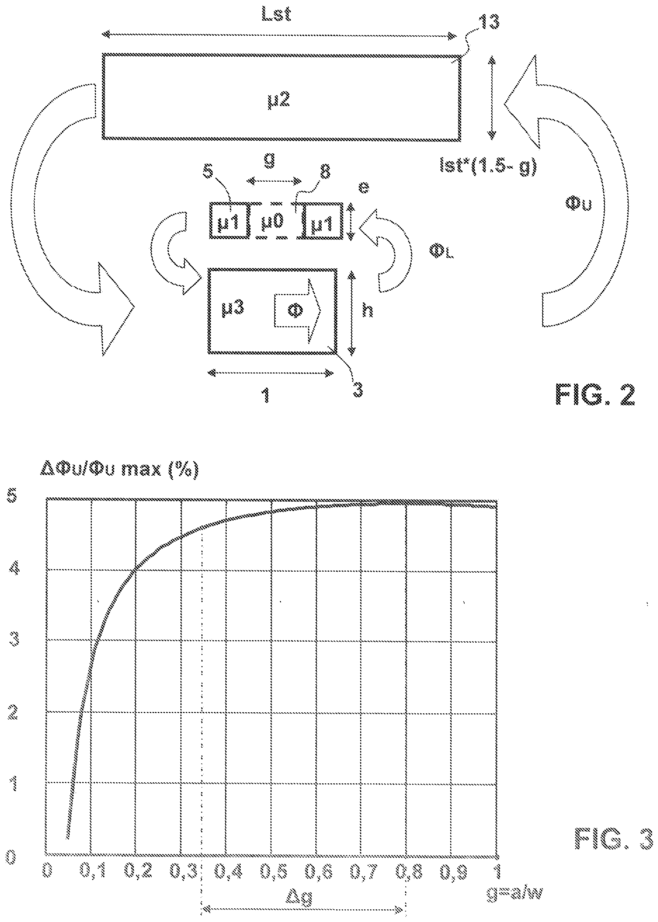

Un modèle simplifié de l'influence de la première largeur a sur la distribution des flux magnétiques utile et de fuite ΦU, ΦL dans le rotor 1 est montré sur la **Figure 2****.**

Les variations de la première largeur a de l'ouverture 8 sont rapportées aux variations d'un ratio d'ouverture g égal à un rapport de la première largeur a à une deuxième largeur w des aimants permanents 3. De la sorte ce ratio g varie de 0, quand les premiers évidements 4 sont complètement ouverts vers l'extérieur, à 1, quand ces premiers évidements 4 sont complètement fermés.

La première réluctance résulte de la somme des réluctances d'un premier segment 8 de la partie circonférentielle 5 du rotor 1 d'une première longueur égale à g, présentant une première perméabilité relative µ0 (égale à celle de l'air), et d'un second segment 5 d'une deuxième longueur 1 - g, dont une deuxième perméabilité relative µ1 est celle de la première carcasse 2 du rotor 1. Les premier et second segments 8, 5 présentent une épaisseur e avec w comme unité.

Une deuxième réluctance intervenant dans ce modèle simplifié est celle d'un circuit magnétique, dans lequel circule le flux magnétique utile ΦU entre les pôles N, S du rotor 1 et les dents statoriques 13 du stator 11, ayant une troisième longueur Lst, et dont une troisième perméabilité relative µ2 est celle d'une seconde carcasse 10 du stator 11.

Dans ce modèle simplifié, on considère que la surface d'un pôle N, S en regard avec une dent statorique 13 varie linéairement en fonction de g selon une loi lst*(1.5 - g), de sorte qu'une dimension de ce circuit dans la direction circonférentielle varie selon la même loi.

Les aimants permanents 3 sont considérés comme un générateur de flux Φ= ΦU + ΦL présentant une troisième réluctance en parallèle résultant d'un milieu de taille égale à 1 dans la direction circonférentielle, d'une hauteur égale à h avec w comme unité, et d'une quatrième perméabilité relative µ3.

La **Figure 3** montre la variation relative du flux magnétique utile ΦU au voisinage du maximum ΦU max en fonction de g.

On constate que le flux magnétique utile ΦU s'accroît quand le ratio d'ouverture g va jusqu'à 0.80.

Dans ce modèle simplifié, une fourchette Δg des valeurs de g comprises entre sensiblement 0,35 et 0,80 permet de rendre le flux magnétique utile ΦU maximum, le flux utile ΦU ne variant que de 0,5% dans cette fourchette Δg.

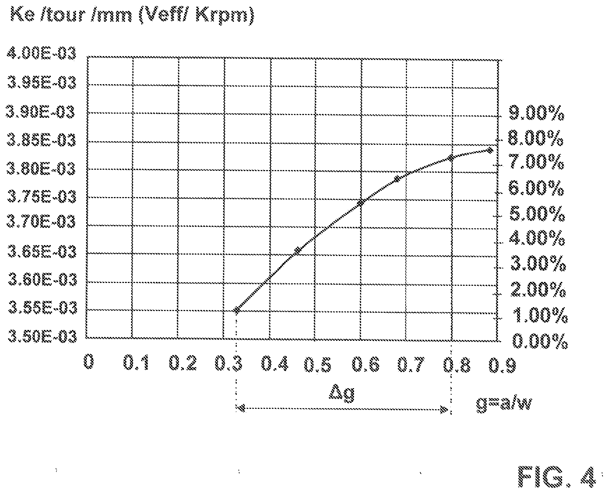

Une simulation sur ordinateur plus réaliste d'une machine électrique tournante comprenant un rotor 1 selon l'invention, confirme l'existence d'un maximum du flux utile ΦU pour une valeur du ratio d'ouverture g sensiblement égal à 0,8, comme le montre la **Figure 4****.**

Cette figure montre l'évolution de la constante de force électromotrice entre phases Ke pour des valeurs du ratio d'ouverture g comprises sensiblement entre 0,3 et 0,9.

La constante Ke est représentative du flux magnétique utile ΦU. On constate qu'elle augmente pour atteindre un maximum vers un ratio d'ouverture g de l'ordre de 0,8.

La structure optimisée du rotor 1 concourt à la préservation des performances de la machine quand des ferrites sont utilisées à la place d'aimants aux terres rares, sans trop accroître la masse des aimants permanents 3.

A technologie constante, l'invention qui contribue à l'augmentation du flux magnétique dans le rotor 1 permet également de réduire l'intensité du champ magnétique tournant créé par le stator 11 nécessaire pour produire un couple donné, et par conséquent permet de réduire la masse de cuivre nécessaire pour réaliser les bobinages statoriques 14.

La réduction de la masse des aimants permanents 3 et du cuivre permet de diminuer les coûts de fabrication et procure donc un avantage commercial dans le domaine très concurrentiel des équipements des véhicules.

Cependant, les possibilités d'optimisation du flux magnétique utile ΦU dans le mode de réalisation principal de l'invention décrit ci-dessus, en jouant sur la première largeur a de l'ouverture des premiers évidements 4, sont limitées par le fait que les sections polaires 7 circonférentielles présentent une troisième largeur p qui tend à diminuer quand a augmente, entraînant une augmentation rapide de la deuxième réluctance du circuit magnétique entre les pôles N, S du rotor 1 et les dents statoriques 13 du stator 11.

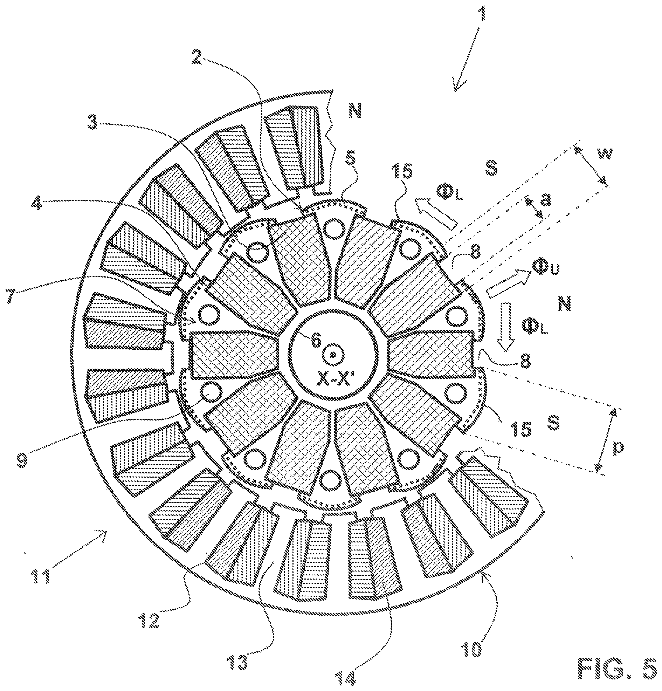

Dans une variante de réalisation, visant à réduire les effets négatifs de l'accroissement de la première largeur a, montrée sur la **Figure 5****,** les sections polaires 7 présentent une seconde section radiale formant lobe 15.

L'ensemble de ces sections polaires 7 forme alors en coupe radiale une figure sensiblement circulaire à plusieurs lobes 15, correspondant à la saillance des pôles N, S.

De la sorte, le recouvrement partiel des aimants permanents 3 par les lobes 15 à la périphérie du rotor 1 augmente l'épaisseur de la partie circonférentielle 5 (le trait en pointillé sur la **Figure 5** montre la surface extérieure du rotor dans le mode principal de réalisation), et contribue à atténuer l'augmentation de la deuxième réluctance du circuit magnétique rotor 1 - stator 11 quant le ratio d'ouverture g augmente, c'est-à-dire concourt à maximiser le flux magnétique utile ΦU tout minimisant le flux magnétique de fuite ΦL.

Dans cette variante de réalisation, l'entité inventive a déterminé qu'un second rapport de la deuxième largueur w des aimants permanents 3 à une somme de la première largueur a de l'ouverture 8 et de la troisième largueur p du lobe sensiblement compris entre 0.25 et 0.6 est optimal.

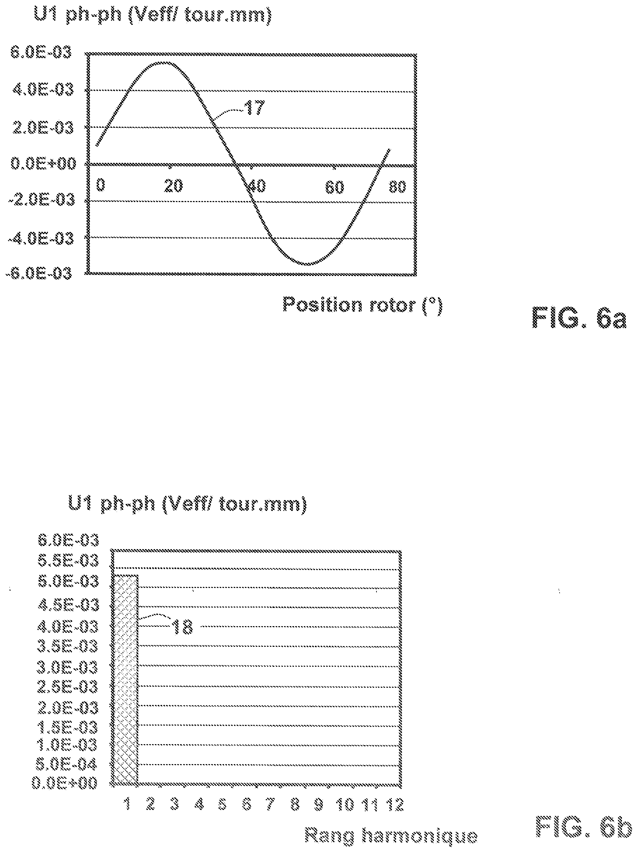

L'avantage de cette variante est un bruit magnétique généré par la machine réduit grâce à la diminution des distorsions harmoniques de la force électromotrice et du couple, comme le montrent les **Figures 6a et 6b****.**

En effet, une forme d'onde 17 de la force électromotrice entre phases U1 ph - ph à vide d'une machine comprenant un rotor 1 selon cette variante **(****Figure 5****)** apparaît comme sensiblement sinusoïdale sur la **Figure 6a**.

La **Figure 6b** confirme qu'il n'y a pas d'autres harmoniques que l'harmonique fondamental 18.

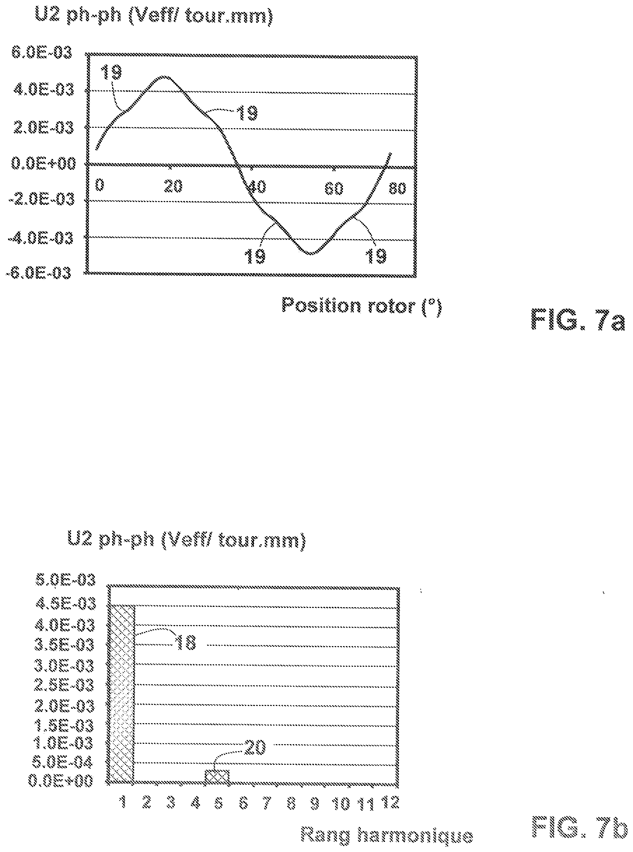

Par comparaison, les **Figures 7a et 7b** montrent les mêmes caractéristiques correspondant à une machine électrique tournante (non représentée) du type de celle montrée sur la **Figure 5** mais dont la partie circonférentielle 5 du rotor 1 ne comprendrait pas de rainures 8 formant ouverture.

Sur la **Figure 7a**, il apparaît clairement que l'autre force électromotrice entre phases U2 ph-ph présente des distorsions 19 par rapport à une forme d'onde sinusoïdale 17.

La **Figure 7b** confirme qu'un harmonique de cinquième rang 20 ayant une amplitude représentant plus de 6% de l'harmonique fondamental 18 est présent dans ce cas, alors qu'il n'existait pour la machine comprenant un rotor 1 selon la variante de réalisation **(****Figure 5****).**

Comme il va de soi, l'invention ne se limite pas aux seuls modes de réalisation préférentiels décrits ci-dessus. L'invention s'étend à d'autres modes de réalisation basés sur des valeurs numériques différentes de celles spécifiées ci-dessus, notamment un nombre de pôles Np différent, et correspondant à d'autres essais ou simulations de machines électriques tournantes comportant un rotor du type décrit, tant qu'ils entrent dans l'étendue de la protection définie dans le jeu de revendications annexé.

## Revendications

1. Rotor (1) de machine électrique tournante comprenant une pluralité de pôles Nord (N) et pôles Sud (S) alternés et formés à partir d'une pluralité d'aimants permanents (3) agencés dans des premiers évidements (4) se prolongeant le long d'un axe (X-X') dudit rotor (1) et répartis régulièrement entre une partie circonférentielle (5) et une partie centrale (6) de la masse magnétique (2) dudit rotor (1) de manière à définir une pluralité de sections polaires (7) circonférentielles, lesdits aimants permanents (3) présentant une première section radiale polygonale et un premier plan de symétrie axial, et ladite partie circonférentielle (5) comportant des rainures axiales (15) agencées entre lesdites sections polaires (7) en regard desdits aimants permanents (3) et formant ouverture desdits premiers évidements (4), **caractérisé en ce qu'**un ratio d'ouverture (g) de ladite partie circonférentielle (5), égal à un premier rapport d'une première largeur (a) de ladite ouverture (8) à une deuxième largeur (w) desdits aimants permanents (3) dans une direction circonférentielle, est sensiblement compris entre 0,35 et 0,8, et **en ce que** lesdites sections polaires (7) présentent une seconde section radiale formant lobe (15) extérieurement et un second plan de symétrie axial et **en ce qu'**un second rapport de ladite deuxième largueur (w) à une somme de ladite première largueur (a) et d'une troisième largueur (p) dudit lobe (15) dans ladite direction circonférentielle est sensiblement compris entre 0,25 et 0,6.

2. Rotor (1) de machine électrique tournante selon la revendication précédente, **caractérisé en ce qu'**il comprend au moins une pluralité de seconds évidements (9) se prolongeant axialement et agencés entre lesdits aimants permanents (3) dans une partie intermédiaire dudit rotor (1) entre ladite partie centrale (6) et ladite partie circonférentielle (5).

3. Rotor (1) de machine électrique tournante selon la revendication précédente, **caractérisé en ce que** des tirants amagnétiques sont agencés dans lesdits seconds évidements (9).

4. Rotor (1) de machine électrique tournante selon l'une quelconque des revendications 1 à 3 précédentes, **caractérisé en ce que** lesdits aimants permanents (3) sont constitués de ferrite.

5. Machine électrique tournante, **caractérisée en ce qu'**elle comprend un rotor (1) selon l'une quelconque des revendications 1 à 4 précédentes.

## Patentansprüche

1. Rotor (1) für eine drehende elektrische Maschine umfassend eine Mehrzahl von Nordpolen (N) und Südpolen (S), die sich abwechseln und aus einer Mehrzahl von Dauermagneten (3) gebildet sind, die in ersten Ausnehmungen (4) angeordnet sind, die sich entlang einer Achse (X-X') des Rotors (1) erstrecken und zwischen einem Umfangsabschnitt (5) und einem Mittelabschnitt (6) der Magnetmasse (2) des Rotors (1) regelmäßig verteilt sind, so dass sie eine Mehrzahl von Polsektionen (7) in Umfangsrichtung definieren, wobei die Dauermagneten (3) einen ersten mehreckigen radialen Querschnitt und eine erste axiale Symmetrieebene aufweisen, wobei der Umfangsabschnitt (5) axiale Rillen (15) aufweist, die zwischen den Polsektionen (7) gegenüber den Dauermagneten (3) angeordnet sind und eine Öffnung der ersten Ausnehmungen (4) bilden, **dadurch gekennzeichnet, dass** ein Öffnungsverhältnis (g) des Umfangsabschnitts (5), das gleich einem ersten Verhältnis einer ersten Breite (a) der Öffnung (8) zu einer zweiten Breite (w) der Dauermagneten (3) in einer Umfangsrichtung ist, im Wesentlichen zwischen 0,35 und 0,8 beträgt, und dadurch, dass die Polsektionen (7) einen zweiten radialen Querschnitt, der äußerlich eine Keule (15) bildet, und eine zweite axiale Symmetrieebene aufweisen, und dadurch, dass ein zweites Verhältnis der zweiten Breite (w) zu einer Summe der ersten Breite (a) und einer dritten Breite (p) der Keule (15) in der Umfangsrichtung im Wesentlichen zwischen 0,25 und 0,6 beträgt.

2. Rotor (1) für eine drehende elektrische Maschine nach dem vorhergehenden Anspruch, **dadurch gekennzeichnet, dass** er wenigstens eine Mehrzahl von zweiten Ausnehmungen (9) umfasst, die sich axial fortsetzen und zwischen den Dauermagneten (3) in einem Mittelabschnitt des Rotors (1) zwischen dem Mittelabschnitt (6) und dem Umfangsabschnitt (5) angeordnet sind.

3. Rotor (1) für eine drehende elektrische Maschine nach dem vorhergehenden Anspruch, **dadurch gekennzeichnet, dass** nichtmagnetische Zugelemente in den zweiten Ausnehmungen (9) angeordnet sind.

4. Rotor (1) für eine drehende elektrische Maschine nach einem der vorhergehenden Ansprüche 1 bis 3, **dadurch gekennzeichnet, dass** die Dauermagneten (3) aus Ferrit gebildet sind.

5. Drehende elektrische Maschine, **dadurch gekennzeichnet, dass** sie einen Rotor (1) nach einem der vorhergehenden Ansprüche 1 bis 4 umfasst.

## Claims

1. Rotor (1) of a rotating electrical machine comprising a plurality of alternating north poles (N) and south poles (S) formed from a plurality of permanent magnets (3) arranged in first gaps (4) extending along an axis (X-X') of said rotor (1) and evenly distributed between a circumferential part (5) and a central part (6) of the magnetic mass (2) of said rotor (1) so as to define a plurality of circumferential polar sections (7), said permanent magnets (3) having a first polygonal radial section and a first axial plane of symmetry, and said circumferential part (5) comprising axial grooves (15) arranged between said polar sections (7) facing said permanent magnets (3) and forming an aperture of said first gaps (4), **characterized in that** an aperture ratio (g) of said circumferential part (5), equal to a first ratio of a first width (a) of said aperture (8) to a second width (w) of said permanent magnets (3) in a circumferential direction, lies substantially between 0.35 and 0.8, and **in that** said polar sections (7) have a second, externally lobe-forming radial section (15) and a second axial plane of symmetry and **in that** a second ratio of said second width (w) to a sum of said first width (a) and of a third width (p) of said lobe (15) in said circumferential direction lies substantially between 0.25 and 0.6.

2. Rotor (1) of a rotating electrical machine according to the preceding claim, **characterized in that** it comprises at least one plurality of second gaps (9) extending axially and arranged between said permanent magnets (3) in an intermediate part of said rotor (1) between said central part (6) and said circumferential part (5).

3. Rotor (1) of a rotating electrical machine according to the preceding claim, **characterized in that** nonmagnetic tie-rods are arranged in said second gaps (9).

4. Rotor (1) of a rotating electrical machine according to any of the preceding Claims 1 to 3, **characterized in that** said permanent magnets (3) are composed of ferrite.

5. Rotating electrical machine, **characterized in that** it comprises a rotor (1) according to any of the preceding Claims 1 to 4.
